# EUROPEAN PATENT APPLICATION

(11) **EP 1 852 246 A2**
(43) Date of publication of application: **07.11.2007**
(21) Application number: 07251883.0
(22) Date of filing: 04.05.2007
(51) Int. Cl.: B29D 11/00

(54) **Package-mold combination**

(30) Priority: 05.05.2006 US 429038
(71) Applicant: Johson & Johnson Vision Care Inc., Jacksonville, FL 32256 (US)
(72) Inventor: Martin, W. Anthony, Orange Park, Florida 32073 (US); Walker, Craig W., Jacksonville, Florida 32224 (US); Rooney, Thomas R., Jacksonville, Florida 32256 (US); Hofmann, Gregory J., Jacksonville Beach, FL 32250 (US); Ansell, Scott F., Jacksonville, FL 32218 (US); Tokarski, Michael G., Ponte Vedra Beach, FL 32082 (US); Katterhenry, David A., Jacksonville, FL 32258 (US)
(74) Representative: Fisher, Adrian John

(57) **Abstract**

This invention includes methods and systems for processing biomedical devices, such as ophthalmic lenses, formed with a prepolymer reaction mixture and packaged within a mold part (102) used to fashion the device.

## Description

### FIELD OF THE INVENTION

This invention relates to a process to produce and package ophthalmic lenses. More specifically, the present invention relates to methods and apparatus for utilizing a primary package as a mold part to mold a lens.

### BACKGROUND OF THE INVENTION

It is well known that contact lenses can be used to improve vision. Various contact lenses have been commercially produced for many years. Early designs of contact lenses were fashioned from hard materials. Although these lenses are still currently used in some applications, they are not suitable for all patients due to their poor comfort and relatively low permeability to oxygen. Later developments in the field gave rise to soft contact lenses, based upon hydrogels.

Hydrogel contact lenses are very popular today. These lenses are often more comfortable to wear than contact lenses made of hard materials. Malleable soft contact lenses can be manufactured by forming a lens in a multi-part mold where the combined parts form a topography consistent with the desired final lens.

Ophthalmic lenses are often made by cast molding, in which a monomer material is deposited in a cavity defined between optical surfaces of opposing mold parts. Multi-part molds used to fashion hydrogels into a useful article, such as an ophthalmic lens, can include for example, a first mold part with a convex portion that corresponds with a back curve of an ophthalmic lens and a second mold part with a concave portion that corresponds with a front curve of the ophthalmic lens. To prepare a lens using such mold parts, an uncured hydrogel lens formulation is placed between the concave and convex surfaces of the mold portions and subsequently cured. The hydrogel lens formulation may be cured, for example by exposure to either, or both, heat and light. The cured hydrogel forms a lens according to the dimensions of the mold portions.

Following cure, traditional practice dictates that the mold portions are separated and the lens remains adhered to one of the mold portions. A release process detaches the lens from the remaining mold part.

According to prior art, following release of the lens from the mold parts, the mold part contains the lens within the concave portion of the mold part and also contains undesirable elements, such as, for example, strands of lens material, residual diluent, or other material other than the lens which may cause discomfort if it is conveyed to a lens wearer's eye. In order to minimize extraneous materials, the lens is therefore removed from the mold part and placed in a package for shipment to an eye care patient.

Accordingly, although it may have been suggested to utilize a mold part as a package, the prior art systems have made it difficult to do so with any known commercial manufacturing systems.

Therefore, it would be advantageous to provide apparatus and methods which facilitate the use of a mold part as a primary package.

### SUMMARY OF THE INVENTION

Accordingly, the present invention provides apparatus and methods for utilizing a mold part as a primary package for conveying the lens to an ophthalmic lens wearer. The present invention teaches the use of precision dosing of monomer into a mold part used to fashion the ophthalmic lens and innovative mold designs can be used to facilitate the use of the mold part as the primary package

### DESCRIPTION OF THE DRAWINGS

FIG. 1 illustrates a diagram of an ophthalmic lens mold and lens.
FIG. 2 illustrates a block diagram of exemplary steps that can be utilized to implement some embodiments of the present invention.
FIG. 3 illustrates a diagram of apparatus that can be utilized to implement some embodiments of the present invention.
FIG. 4 illustrates some embodiments with concentric rings fashioned into a mold part that can be used to remove excess lens material.
FIG. 5 illustrates some embodiments with a base curve mold package and retention area.

### DETAILED DESCRIPTION OF THE INVENTION

The present invention relates to the use of a mold part as a primary package for an ophthalmic lens.

### Definitions

As used herein, "released from a mold," means that a lens is either completely separated from the mold, or is only loosely attached so that it can be removed with mild agitation or pushed off with a swab.

### Lenses

As used herein "lens" refers to any ophthalmic device that resides in or on the eye. These devices can provide optical correction or may be cosmetic. For example, the term lens can refer to a contact lens, intraocular lens, overlay lens, ocular insert, optical insert or other similar device through which vision is corrected or modified, or through which eye physiology is cosmetically enhanced (e.g. iris color) without impeding vision.

As used herein, the term "lens forming mixture" refers to a prepolymer material which can be cured, to form an ophthalmic lens. Various embodiments can include prepolymer mixtures with one or more additives such as: UV blockers, tints, photoinitiators or catalysts, and other additives one might desire in an ophthalmic lenses such as, contact or intraocular lenses. Lens forming mixtures are more fully described below.

### Molds

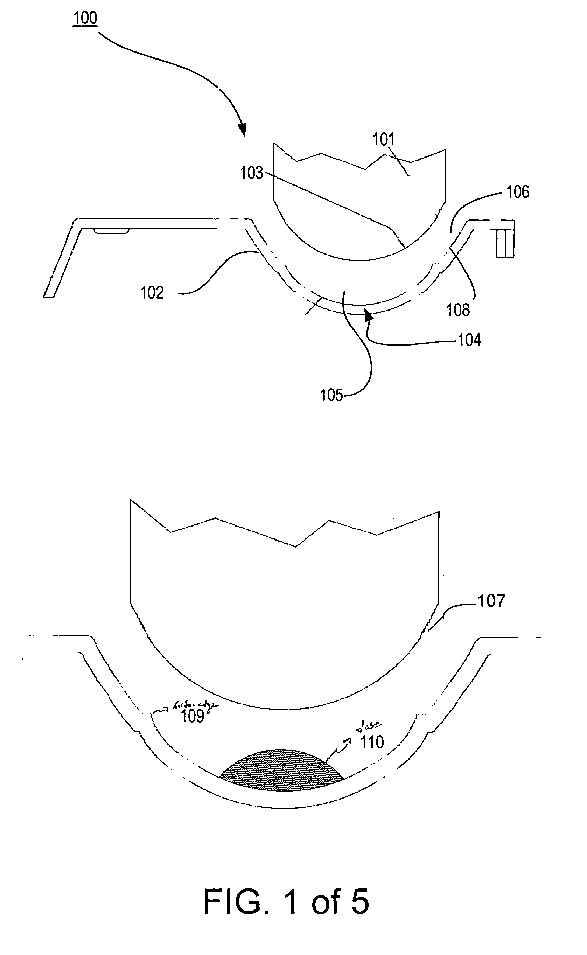

Referring now to Fig. 1, a diagram of an exemplary mold for an ophthalmic lens is illustrated. As used herein, the terms "mold" and "mold assembly" refer to a form 100 having a cavity 105 into which a lens forming mixture can be dispensed such that upon reaction or cure of the lens forming mixture (not illustrated), an ophthalmic lens of a desired shape is produced. The molds and mold assemblies 100 of this invention are made up of more than one "mold parts" or "mold pieces" 101-102. The mold parts 101-102 can be brought together such that a cavity 105, in which a lens can be fashioned, is formed by combination of the mold parts 101-102. This combination of mold parts 101-102 is preferably temporary. Upon formation of the lens, the mold parts 101-102 can again be separated for removal of a fashioned lens (not shown.

A "mold part" as the term is used in this specification refers to a portion of mold 101-102, which when combined with another portion of a mold 101-102 forms a mold 100 (also referred to as a mold assembly 100). At least one mold part 101-102 has at least a portion of its surface 103-104 in contact with the lens forming mixture such that upon reaction or cure of the lens forming mixture that surface 103-104 provides a desired shape and form to the portion of the lens with which it is in contact. The same is true of at least one other mold part 101-102.

Thus, for example, in a preferred embodiment a mold assembly 100 is formed from two parts 101-102, a female concave piece (front curve mold part) 102 and a male convex piece (back curve mold part) 101 with a cavity formed between them. The portion of the concave surface 104 which makes contact with lens forming mixture has the curvature of the front curve of an ophthalmic lens to be produced in the mold assembly 100 and is sufficiently smooth and formed such that the surface of a ophthalmic lens formed by polymerization of the lens forming mixture which is in contact with the concave surface 104 is optically acceptable.

In some embodiments, the front curve mold part 102 can also have an annular flange integral with and surrounding circular circumferential edge 108 and extends from it in a plane normal to the axis and extending from the flange (not shown).

The back curve mold part 101 has a convex surface 103 in contact which contacts the lens forming mixture and has the curvature of the back curve of a ophthalmic lens to be produced in the mold assembly 100. The convex surface 103 is sufficiently smooth and formed such that the surface of a ophthalmic lens formed by reaction or cure of the lens forming mixture in contact with the back surface 103 is optically acceptable. Accordingly, the inner concave surface 104 of the front curve mold part 102 defines the outer surface of the ophthalmic lens, while the outer convex surface 103 of the back mold piece 101 defines the inner surface of the ophthalmic lens. In some embodiments, the back curve mold part 101 can also include one or more concentric ring shaped ridges 107 which form an excess lens material ring puller 107 by engaging excess prepolymer which is cured and binds to the ridges so that it may be removed when the mold parts 101-102 separate.

According to the present invention, the front curve mold part 102 additionally includes a retention area 106, which includes an area defined by the convex surface and a retention area surface 108. The retention area 106 is for containing a formed lens and packing solution (not shown in Fig. 1) after the lens has been fashioned.

In some preferred methods a molds assembly100 is injection molding according to known techniques, however, embodiments can also include molds 100 fashioned by other techniques including, for example: lathing, diamond turning, or laser cutting.

As used herein "lens forming surface" means a surface 103-104 that is used to mold a lens. In some embodiments, any such surface 103-104 can have an optical quality surface finish, which indicates that it is sufficiently smooth and formed so that a lens surface fashioned by the polymerization of a lens forming material in contact with the molding surface is optically acceptable. Further, in some embodiments, the lens forming surface 103-104 can have a geometry that is necessary to impart to the lens surface the desired optical characteristics, including without limitation, spherical, aspherical and cylinder power, wave front aberration correction, corneal topography correction and the like as well as any combinations thereof.

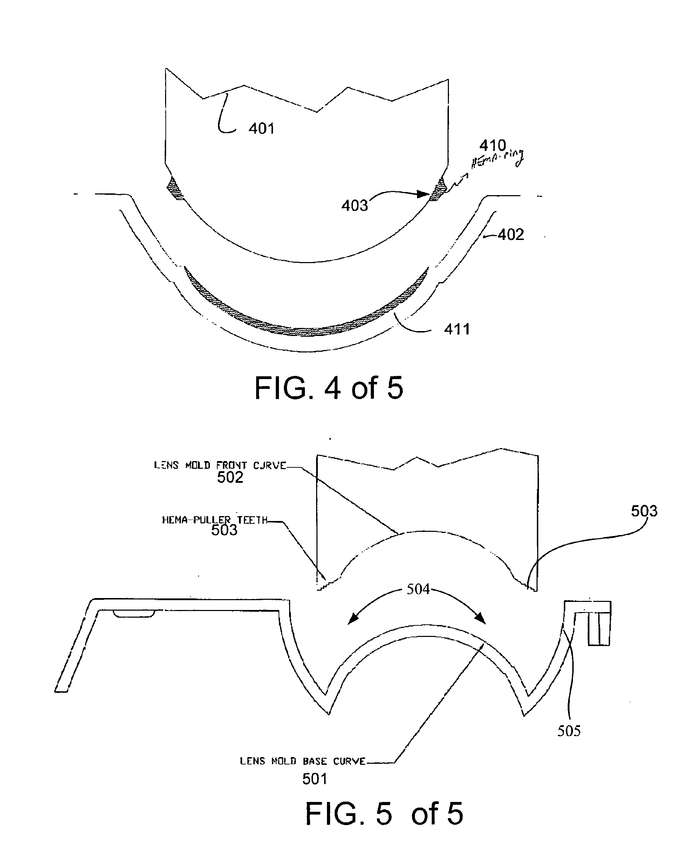

Referring now to Figs. 4 and 5, alternative features available in some embodiments of the present invention are illustrated. Fig. 4 illustrates a back curve mold part 401 and a front curve mold part 402, with a lens 411 formed against the front curve mold part 402. In addition, Fig. 4 illustrates excess material, sometimes referred to as a HEMA ring 410, attached to one or more ridges 403 which can be formed, for example as concentric rings, into the back curve mold part 401. The ridges 403, sometimes referred to as a HEMA ring puller, can be utilized in some embodiments to remove excess cured material 410 and in some embodiments to remove excess prepolymer material 410.

Referring now to Fig. 5, some embodiments of the present invention can include a back curve mold part 501 which is combined with a retention area 504. The retention area 504 can be defined by sidewalls 505 included in the back curve mold part 501.

Some embodiments can likewise include a front curve mold part 502 which does not have a retention area 504. It is also within the scope of this invention for the front curve mold part 502 to include puller teeth, or concentric rings, which are suitable to remove excess material during mold pan 501-502 separation.

### Method Steps

Following polymerization of the Reaction Mixture to form a lens 100, the lens surface 103 will typically adhere to the mold part surface 104..

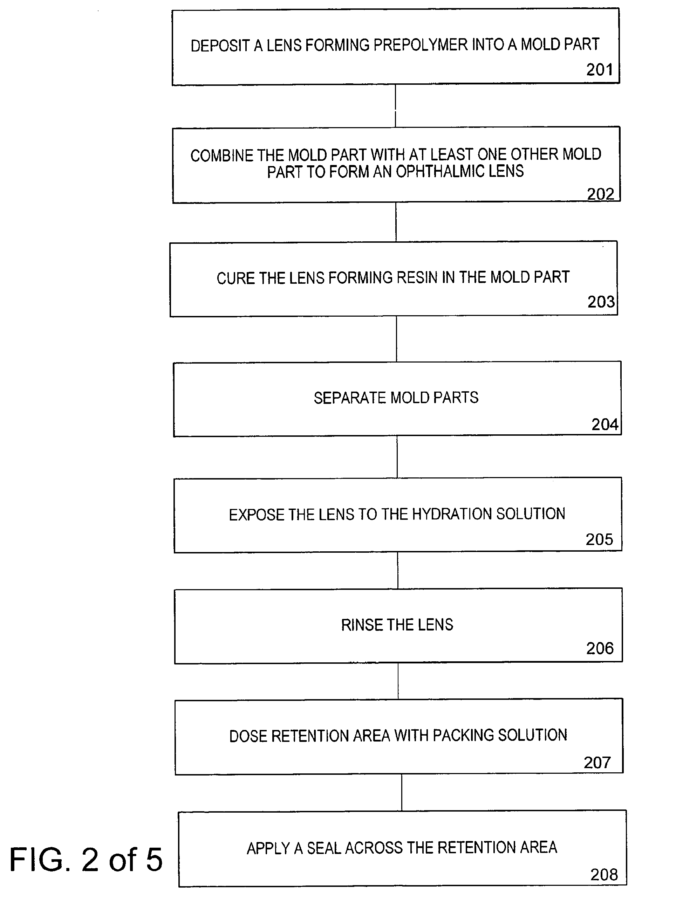

Referring now to Fig. 2, a flow diagram illustrates exemplary steps that may be implemented in some embodiments of the present invention. It is to be understood that some or all of the following steps may be implemented in various embodiments of the present invention. At 201, the Reaction Mixture (described in more detail below), is deposited into a first mold part 102, which is utilized to shape the ophthalmic lens 100.

At 202, the first mold part 102 can be combined with at least one other mold part (the second mold part) 101 to shape the deposited silicone monomer or other Reaction Mixture.

At 203, the Reaction Mixture is cured and formed into a lens 100. Curing can be effected, for example, by various means known in the art, such as, exposure of the monomer to actinic radiation, exposure of the monomer to elevated heat (i.e. 40°C to 75°C), or exposure to both actinic radiation and elevated heat.

At 204, the first mold part 101 can be separated from the second mold part 102 in a demolding process. In some embodiments, the lens 100 will have adhered to the second mold part 102 (i.e. the front curve mold part) during the cure process and remain with the second mold part 102 after separation until the lens 100 has been released from the front curve mold part 102. In other embodiments, the lens 100 can adhere to the first mold part 101.

At 205, in some embodiments of the present invention, the lens is exposed to a hydration solution. The hydration solution can include, for example, deionized (DI) water. In addition, some embodiments can include an aqueous solution with one or more additives, such PEG; PEO; Tween 80, which is polyoxyethylene sorbitan monooleate; Tyloxapol; octylphenoxy (oxyethylene) ethanol; amphoteric 10); preservatives (e.g. EDTA, sorbic acid, DYMED, chlorhexadine gluconate; hydrogen peroxide; thimerosal; polyquad; polyhexamethylene biguanide; antibacterial agents; lubricants; salts and buffers. In some embodiments, additives can be added to the hydration solution in amounts varying between 0.01% and 10% by weight, but cumulatively less than about 10% by weight.

The temperatures of the hydration solution can be anywhere from near freezing to near boiling; however, it is preferred that the temperatures between 30° C and 72° C, and even more preferably between 45° C and 65° C.

Exposure of the ophthalmic lens 100 to the hydration solution can be accomplished by washing, spraying, soaking, submerging, or any combination of the aforementioned. For example, in some embodiments, the lens 100 can be washed with a hydration solution of deionized water and PEG 2000 in a hydration tower.

To hydrate the lenses by washing in a hydration tower, front curve mold parts 102 containing lenses 100 can be placed in pallets or trays and stacked vertically. The solution can be introduced at the top of the stack of lenses 100 so that the solution will flow downwardly over the lenses 100. The solution can also be introduced at various positions along the tower. In some embodiments, the trays can be moved upwardly allowing the lenses 100 to be exposed to increasingly fresher solution.

In other embodiments, the ophthalmic lenses 100 can cycle through exposure to a hydration solution, such as DI water which is dosed into the mold part 102 and the retention area 106 during the hydration step 205. At 206, some embodiments can also include rinsing the lens of residual hydration

According to some embodiments of the present invention that expose the lenses to the hydration solution via submersion, magazines can be accumulated and then lowered into tanks containing the hydration solution. In addition, in some embodiments, the hydration solution can be heated to a temperature of between about 30°C and 72°C.

At 207, the retention area in the package mold part 102 is filled with a packing solution. Packing solutions are well known in the art and can include, for example additives to improve wearer comfort or maintain lens quality. At 208 a package seal is applied to retain the packing solution within the retention area. The package seal can include, for example a polymer film or a foil (not shown) or mixtures thereof. The retention area can therefore be releasably sealed with a film.

The sealed packages containing the lenses are then sterilized to ensure a sterile product. Suitable sterilization means and conditions are known in the art, and include, for example, autoclaving.

### Apparatus

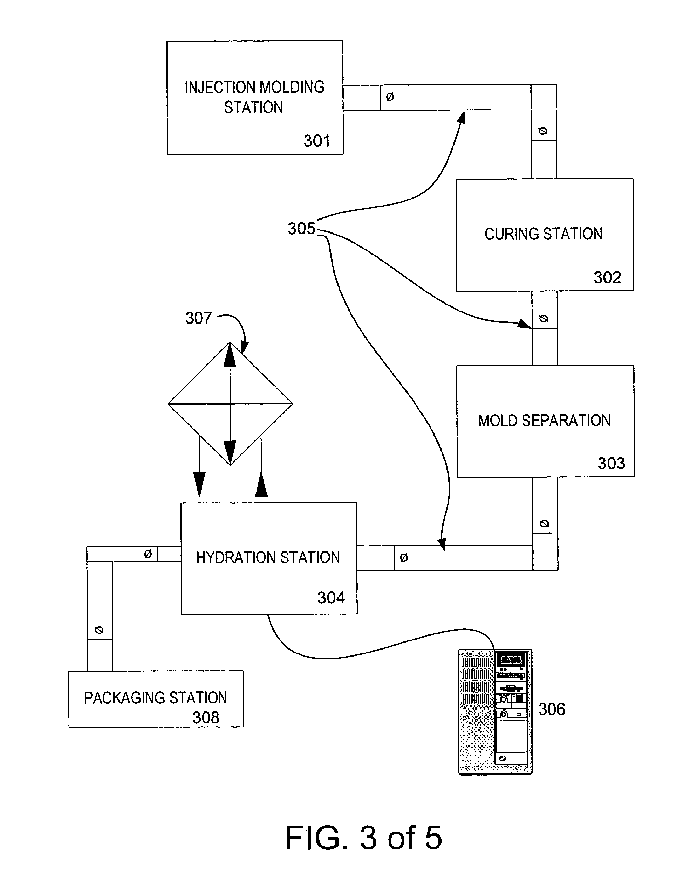

Referring now to Fig. 3, a block diagram is illustrated of apparatus contained in processing stations 301-304 that can be utilized in implementations of the present invention. In some preferred embodiments, processing stations 301-304 can be accessible to ophthalmic lenses 100 via a transport mechanism 305. The transport mechanism 305 can include for example one or more of: a robot, a conveyor and a rail system in conjunction with a locomotion means that may include, a conveyor belt, chain, cable or hydraulic mechanism powered by a variable speed motor or other known drive mechanism (not shown).

Some embodiments can include back surface mold parts 101 placed in pallets (not shown). The pallets can be moved by the transport mechanism 305 between two or more processing stations 301-304. A computer or other controller 306 can be operatively connected to the processing stations 301-304 to monitor and control processes at each station 301-304 and also monitor and control the transport mechanism 305 to coordinate the movement of lenses between the process stations 301-304.

Processing stations 301-304 can include, for example, an injection molding station 301. At the injection molding station 301, injection molding apparatus deposits a quantity of a Reaction Mixture, such as, for example, a silicone hydrogel as described above, into the front curve mold portion 102 and preferably completely covers the mold surface 104 with the Reaction Mixture. The Reaction Mixture should comprise any material or mixture of materials, which upon polymerization yields an optically clear, integral shape-sustaining contact lens or contact lens precursor.

As utilized in this application, a "precursor" means an object which has the desired relative dimensions and which upon subsequent hydration in water or buffered isotonic saline aqueous solution can be worn as a contact lens. Examples of such compositions abound in this field and are readily ascertainable by reference to standard literature sources.

In some embodiments, polymerization of Reaction Mixture can be carried out in an atmosphere with controlled exposure to oxygen, including, in some embodiments, an oxygen-free environment, because oxygen can enter into side reactions which may affect a desired optical quality, as well as the clarity of the polymerized lens. In some embodiments, the lens mold halves are also prepared in an atmosphere that has limited oxygen or is oxygen-free. Methods and apparatus for controlling exposure to oxygen are well known in the art.

A curing station 302 can include apparatus for polymerizing the Reaction Mixture. Polymerization is preferably carried out by exposing the Reaction Mixture, including the PEG 2000 or other PEG or PEO to polymerization initiating conditions. Curing station 302 therefore includes apparatus that provide a source of initiation of the Reaction Mixture deposited into the front curve mold 102. The source of initiation can include for example, one or more of: actinic radiation and heat. In some embodiments, actinic radiation can be sourced from bulbs under which the mold assemblies travel. The bulbs can provide an intensity of actinic radiation in a given plane parallel to the axis of the bulb that is sufficient to initiate polymerization.

In some embodiments, a curing station 302 heat source can be effective to raise the temperature of the Reactive Mixture to a temperature sufficient to assist the propagation of the polymerization and to counteract the tendency of the Reaction Mixture to shrink during the period that it is exposed to the actinic radiation and thereby promote improved polymerization. Some embodiments can therefore include a heat source that can maintain the temperature of the Reaction Mixture (by which is meant that resin before it begins to polymerize, and as it is polymerizing) above the glass transition temperature of the polymerized product or above its softening temperature as it is polymerizing. Such temperature can vary with the identity and amount of the components in the Reaction Mixture. In general, some embodiments include apparatus capable of establishing and maintaining temperatures on the order of 40° C degree to 75° C.

In some embodiments, a source of heat can include a duct, which blows warm gas, such as, for example, N₂ or air, across and around the mold assembly as it passes under the actinic radiation bulbs. The end of the duct can be fitted with a plurality of holes through which warm gas passes. Distributing the gas in this way helps achieve uniformity of temperature throughout the area under the housing. Uniform temperatures throughout the regions around the mold assemblies can facilitate more uniform polymerization.

A mold separation station 303 can include apparatus to separate the back curve mold part 101 from the front curve mold part 102. Separation can be accomplished for example with mechanical fingers and high speed robotic movement that pry the mold parts apart.

In some embodiments, a cured lens which includes a polymer/diluent mixture can be treated by exposure to a hydration solution at a hydration station 304 which removes the diluent and ultimately replaces the diluent with water, whereby a silicone hydrogel lens is formed having a final size and shape which are quite similar to the size and shape of the original molded polymer/diluent article.

In some embodiments, a heat exchanger 307 is used to maintain the temperature of the hydration solution at a temperature greater than typical ambient room temperature. For example, and without limitation, a heat exchanger can be used to raise the temperature of the hydration solution to about 30° C to about 72° C.

### Lens Materials

Ophthalmic lenses suitable for use with the current invention include those made from prepolymers.

In some embodiments of the present invention, lenses are formed from prepolymer compositions that include poly-HEMA having a peak molecular weight between about 25,000 and about 100,000, preferably between 25,000 and 80,000 and a polydispersity of less than about 2 to less than about 3.8 respectively and covalently bonded thereon, at least one cross-linkable functional group.

In some embodiments of the present invention it is desirable to limit shrinkage, expansion and related attributes of poly-HEMA hydrogels through the use of hydrogels formed from a crosslinkable prepolymer having a relatively low molecular weight and low polydispersity.

As used herein "poly-HEMA" means polymers which comprise 2-hydroxethyl methacrylate repeat units. The poly-HEMA utilized in some embodiments of the present invention has a peak molecular weight in the range from about 25,000 with a polydispersity of less than about 2 to a peak molecular weight of about 100,000 with a polydispersity of less than about 3.8. Preferably, the can have a peak molecular weight between about 30,000 with a polydispersity of less than about 2 and about 90,000 with a polydispersity of less than about 3.5. More preferably, the compositions can have a peak molecular weight between about 30,000 with a polydispersity of less than about 2 and about 80,000 with a polydispersity of less than about 3.2. Suitable poly-HEMA may also have a peak molecular weight below about 100,000 and a polydispersity of less than about 2, and preferably a peak molecular weight between about 45,000 and 100,000 and a polydispersity of less than about 2.5. In certain embodiments the polydispersity is less than about 2.5, preferably less than about 2, more preferably less than about 1.7 and in some embodiments is less than about 1.5. The term poly-HEMA as used above and throughout this specification will include polymers prepared from 2-hydroxethyl methacrylate alone as well as copolymers with other monomers or co-reactants as further described below.

Suitable comonomers which may be polymerized with HEMA monomer include hydrophilic monomers such as vinyl-containing monomers and hydrophobic monomers as well as tinted monomers giving light absorption at different wavelengths. The term "vinyl-type" or "vinyl-containing" monomers refer to monomers comprising the vinyl group (-CR=CR'R", in which R, R' and R" are monovalent substituents), which are known to polymerize relatively easily. Suitable vinyl-containing monomers include N,N-dimethyl acrylamide (DMA), glycerol methacrylate (GMA), 2-hydroxyethyl methacrylamide, polyethyleneglycol monomethacrylate, methacrylic acid (MAA), acrylic acid, N-vinyl lactams (e.g. N-vinyl-pyrrolidone, or NVP), N-vinyl-N-methyl acetamide, N-vinyl-N-ethyl acetamide, N-vinyl-N-ethyl formamide, N-vinyl formamide, vinyl carbonate monomers, vinyl carbamate monomers, oxazolone monomers mixtures thereof and the like.

Some preferred hydrophilic monomers which may be incorporated into polymer utilized in some embodiments can include hydrophilic monomers such as DMA, GMA, 2-hydroxyethyl methacrylamide, NVP, polyethyleneglycol monomethacrylate, MAA, acrylic acid and mixtures thereof. DMA, GMA and MAA are the most preferred in certain embodiments.

Suitable hydrophobic monomers include silicone-containing monomers and macromers having a polymerizable vinyl group. Preferably the vinyl group is a methacryloxy group. Examples of suitable silicone containing monomers and macromers include mPDMS type monomers, which comprise at least two [-Si-O-] repeating units, SiGMA type monomers which comprise a polymerizable group having an average molecular weight of about less than 2000 Daltons, a hydroxyl group and at least one "-Si-O-Si-" group and TRIS type monomers which comprise at least one Si(OSi-)₃ group. Examples of suitable TRIS monomers include methacryloxypropyltris(trimethylsiloxy)silane, methacryloxypropylbis(trimethylsiloxy)methylsilane, methacryloxypropylpentamethyldisiloxane, mixtures thereof and the like.

Preferably, the mPDMS type monomers comprise total Si and attached O in an amount greater than 20 weight percent, and more preferably greater than 30 weight percent of the total molecular weight of the silicone-containing monomer. Suitable mPDMS monomers have the formula

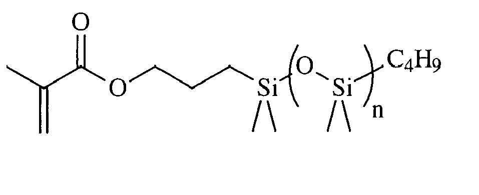

Examples of suitable linear mono-alkyl terminated polydimethylsiloxanes ("mPDMS") include: 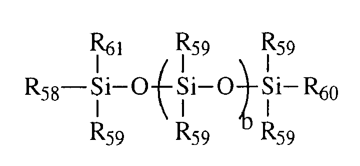 where b = 0 to 100, where it is understood that b is a distribution having a mode approximately equal to a stated value, preferably 4 to 16, more preferably 8 to 10; R₅₈ comprises a polymerizable monovalent group containing at least one ethylenically unsaturated moiety, preferably a monovalent group containing a styryl, vinyl, (meth)acrylamide or (meth)acrylate moiety, more preferably a methacrylate moiety; each R₅₉ is independently a monovalent alkyl, or aryl group, which may be further substituted with alcohol, amine, ketone, carboxylic acid or ether groups, preferably unsubstituted monovalent alkyl or aryl groups, more preferably methyl; R₆₀ is a monovalent alkyl, or aryl group, which may be further substituted with alcohol, amine, ketone, carboxylic acid or ether groups, preferably unsubstituted monovalent alkyl or aryl groups, preferably a C₁₋₁₀ aliphatic or aromatic group which may include hetero atoms, more preferably C₃₋₈ alkyl groups, most preferably butyl; and R₆₁ is independently alkyl or aromatic, preferably ethyl, methyl, benzyl, phenyl, or a monovalent siloxane chain comprising from 1 to 100 repeating Si-O units.

Preferably in the SiGMA type monomer silicon and its attached oxygen comprise about 10 weight percent of said monomer, more preferably more than about 20 weight percent. Examples of SiGMA type monomers include monomers of Formula I 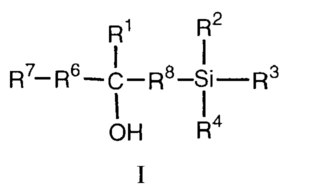 Wherein the substituents are as defined in US 5,998,498, which is incorporated herein by reference.

Specific examples of suitable SiGMA type monomers include 2-propenoic acid, 2-methyl-2-hydroxy-3-[3-[1,3,3,3-tetramethyl-1-[trimethylsilyl)oxy]disiloxanyl]propoxy]propyl ester 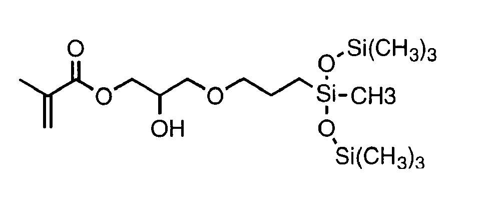 and (3-methacryloxy-2-hydroxypropyloxy)propyltris(trimethylsiloxy)silane

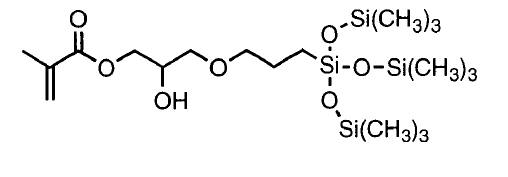

Yet further examples of SiGMA type monomers include, without limitation (3-methacryloxy-2-hydroxypropyloxy) propylbis(trimethylsiloxy)methylsilane.

In some embodiments, hydrophobic monomers, such as, for example, methylmethacrylate and ethylmethacrylate may be incorporated into the poly-HEMA to modify the water absorption, oxygen permeability, or other physical properties as demanded by the intended use. In some embodiments, an amount of comonomer can be less than about 50 weight %, and preferably between about 0.5 and 40 weight %. Specific ranges can depend upon a desired water content for the resulting hydrogel, a solubility of the monomers selected and diluent selected. For example, in embodiments wherein the comonomer comprises MMA, it may be beneficially included in amounts less than about 5 weight% and preferably between about 0.5 and about 5 weight%. In other embodiments the comonomer may comprise GMA in amounts up to about 50 weight%, preferably between about 25 weight % and about 45 weight %. In still other embodiments the comonomer can comprise DMA in amounts up to about 50 weight %, and preferably in amounts between about 10 and about 40 weight %.

Some embodiments can also include the use of initiators and chain transfer agents. Various embodiments may therefore include the use of any desirable initiators, including, without limitation, thermally activated initiators, UV and/or visible light photoinitiators and the like and combinations thereof. Suitable thermally activated initiators include lauryl peroxide, benzoyl peroxide, isopropyl percarbonate, azobisisobutyronitrile, 2,2-azobisisobutyronitrile, 2,2-azobis-2-methylbutyronitrile and the like. Preferred initiators comprise 2,2-azobis-2-methylbutyronitrile (AMBM) and/or 2,2-azobisisobutyronitrile (AIBN).

The initiator is used in the reaction mixture in effective amounts, e.g., from about 0.1 to about 5 weight percent, and preferably from about 0.1 to about 2 parts by weight per 100 parts of reactive monomer.

The poly-HEMA of the present invention may be formed in a number of ways. In some embodiments HEMA monomer and any desired comonomers are polymerized via free radical polymerization. The polymerization is conducted in any solvent, which is capable of dissolving the HEMA monomer and the resulting poly-HEMA during the polymerization. Suitable solvents for the polymerization of the HEMA monomer include alcohols, glycols, polyols, aromatic hydrocarbons, ethers, esters, ester alcohols, ketones, sulfoxides, pyrrolidones, amides mixtures thereof and the like. Specific solvents include methanol, ethanol, isopropanol, 1-propanol, methyllactate, ethyllactate, isopropyllactate, glycolethers like the Dowanol range of products, ethoxypropanol, DMF, DMSO, NMP, cyclohexanone, mixtures thereof and the like. Preferred solvents include alcohols having one to four carbon atoms and more preferably, ethanol, methanol and isopropanol. Sufficient solvent must be used to dissolve the monomers. Generally about 5 to about 25 weight% monomers in the solvent is suitable.

The free radical polymerization can be conducted at temperatures between about 40° and about 150°C. The upper limit can be determined by the pressure limitation of the equipment available and the ability to handle the polymerization exotherm. The lower limit can be determined by the maximum acceptable reaction time and/or properties of initiator. For polymerization at about ambient pressure a preferred temperature range is between about 50°C and about 110°C, and more preferably between about 60° to about 90°C and for times necessary to provide the desired degree of conversion. A free radical polymerization reaction proceeds relatively fast. Between about 90 to about 98% of the monomer reacts within about one to about 6 hours. If a more complete conversion is desired, (greater than about 99%), the reaction may be conducted from about 12 to about 30 hours, and more preferably between about 16 and about 30 hours. Since the poly-HEMA prepared in the polymerization step in many instances will undergo a fractionation to remove low molecular weight species, it may not, in all embodiments, be required to bring the polymerization process to a high degree of conversion. Pressure is not critical and ambient pressures may be conveniently used.

In some embodiments, chain transfer agents may optionally be included. Chain transfer agents useful in forming the poly-HEMA may have chain transfer constants values of greater than about 0.001, preferably greater than about 0.2, and more preferably greater than about 0.5Exemplary chain transfer agents include, without limitation, aliphatic thiols of the formula R-SH wherein R is a C₁ to C₁₂ aliphatic, a benzyl, a cycloaliphatic or CH₃(CH₂)ₓ-SH wherein x is 1 to 24, benzene, n-butyl chloride, t-butyl chloride, n-butyl bromide, 2-mercapto ethanol, 1-dodecyl mercaptan, 2-chlorobutane, acetone, acetic acid, chloroform, butyl amine, triethylamine, di-n-butyl sulfide and disulfide, carbon tetrachloride and bromide, and the like, and combinations thereof. Generally, about 0 to about 7 weight percent based on the total weight of the monomer formulation will be used. Preferably dodecanethiol, decanethiol, octanethiol, mercaptoethanol, or combinations thereof is used as the chain transfer agent.

In some embodiments it is preferred to polymerize the poly-HEMA without a chain transfer agent. Accordingly, alcohols may be used as a solvent in some embodiments, preferably alcohols having one to four carbon atoms, and preferably the solvent is methanol, ethanol, isopropanol and mixtures thereof.

The poly-HEMA formed in the free radical polymerization has a polydispersity which is too high for direct use in the present invention. This is caused by the reaction kinetics of the process in which an important terminating reaction is a combination of two growing polymer chains. Accordingly, when using free radical polymerization to form the poly-HEMA of the present invention it is necessary to purify the poly-HEMA either before or after functionalization to remove the polymer having molecular weights outside the desired range. Any method capable of separating a material based upon molecular weight may be used.

Fractionation using solvent/non-solvents may be used. Purification of HEMA copolymers via precipitation via the drop-wise addition of a HEMA copolymer to a non-solvent has been described in US 4,963,159. The precipitated HEMA copolymer may then be dissolved in a solvent to obtain a solution that is substantially free from unpolymerized monomer.

The solvent and non-solvent may be selected on the bases of Hansen Solubility parameters to remove undesirably high molecular weight poly-HEMA to form the poly-HEMA of the present invention. Hansen Solubility Parameters describe polymer-liquid interactions and each solvent and polymer can be assigned a set of three parameters δ_{H}, δ_{P}, δ_{D}, describing their interactions. Each set of three parameters defines a point in a three-dimensional solubility space.

Once the poly-HEMA is dissolved, a non-solvent that decreases (moves toward the origin) at least one of the solubility parameters of the resultant separation mixture is gradually added to the dissolved poly-HEMA solution until the desired degree of precipitation of high molecular weight material is obtained. It is not necessary to reduce all three solubility parameters. In many embodiments it will be sufficient to reduce only one of the parameters such as the δ_{H} parameter. In other embodiments it will be advantageous to reduce both the δ_{H} and the δ_{P} parameters. We have found that often a surprising small reduction (as little as about 2 to about 5 units) of the solvent parameters will give the desired separation.

The non-solvent must reduce at least one of the parameters to insure the selective precipitation of the poly-HEMA having a peak molecular weight of greater than about 90,000. If the non-solvent increases the solubility parameters of the separation mixture, precipitation is much less a function of the molecular weight, and poly-HEMA within the desired molecular weight range is lost.

The amount and rate of precipitation will vary depending upon the temperature at which the separation is conducted, the solubility parameters of the non-solvent and rate at which the non-solvent is added and whether there is adequate mixing of the non-solvent. Depending on the molecular weight of the poly-HEMA produced by the free radical polymerisation the amount of polymer precipitated may be between about 5 and about 50% of the total poly-HEMA in the solution to obtain the desired removal of high molecular weight polymer.

The high molecular weight poly-HEMA precipitates from the solvent/non-solvent mixture and may be separated by conventional means such as filtration, centrifugation and the like. If further separation is desired the fractionation can be repeated by further lowering of the solvent parameters as described above. Again it will primarily be the material with the highest molecular weight that separates out and can be removed from the solution.

The high molecular weight poly-HEMA; which is desirably selectively removed, has a high viscosity in solution. This can in some instances give a very difficult separation when using the method described above. The present invention therefore provides an alternate fractionation method wherein a homogeneous solution of poly-HEMA is cooled slightly so the polymer solution separates into two liquid phases according to molecular weight range. The method comprises the following steps:
1. Prepare a solution of poly-HEMA in a solvent using the Hansen solubility ranges and within the ranges defined above.
2. Determine the separation temperature, Tₛ, of the solution by cooling a sample of the solution until the sample becomes non-homogeneous and separates into two phases. The temperature at which the first tendency of separation or turbidity is observed is the Tₛ.
3. Cool the solution to a temperature below the Tₛ at which two phases form,
4. Separate the two phases. The lower phase will contain the highest molecular weight material.

Using the above method, It may be possible, first to remove the high molecular weight poly-HEMA, and then to remove the poly-HEMA that has a molecular weight that is lower than the desired range. So, for example, the poly-HEMA/solvent mixture is cooled to a few degrees below the Tₛ, allowed to separate into two phases, the upper phase containing low and medium molecular weight poly-HEMA is siphoned off, cooled to a lower temperature to achieve a second separation, the second upper phase, which is a thin solution of the low end fraction, is siphoned off, and the second lower phase, which primarily contains the desired low polydispersity poly-HEMA is worked up. The poly-HEMA in the second lower phase has a considerably reduced amount of high and low molecular weight poly-HEMA.

For many applications the polymer obtained from this second lower phase can be used directly. It may be possible to carry out a further fractionation by repeating the process described above.

It may be possible to influence the Tₛ, by proper choice of solvent. For example a solution of poly-HEMA in isopropanol will have a higher Tₛ than a solution in which the solvent is ethanol. By using mixtures of solvents It may be possible to fine tune the temperature at which the best separation can be obtained. Suitable solvents which are useful for fractionation based upon Tₛ include solvents having low δ_{H} and the δ_{P} parameters, and preferably δ_{H} less than about 4 and the δ_{P} less than about 6. Specific examples include hexane and heptane. This may be useful when the purpose is to remove the low-end material from a solution from which the high molecular weight poly-HEMA has already been removed. To obtain a renewed separation it is often required to use temperatures well below room temperature such as from about 5 to about 10°C. In such cases it can be practical to add a minor amount of a solvent that raises the separation temperature to a more practical level, for example where the poly-HEMA solution remains a liquid, e.g., between about ambient and about 50°C.

The Tₛ is also influenced by the concentration and polydispersity of the poly-HEMA in the solution. For instance, the removal of high and low molecular weight poly-HEMA may result in a poly-HEMA that in solution gives a higher Tₛ than the original, more polydisperse material. Also dilution to lower concentration may lead to separation at higher temperature. It may be possible that the reason for this is that a certain concentration of low molecular weight poly-HEMA chains may help to keep the longer chains in solution.

By manipulation of polymer concentration, choice of solvent, and separation temperature It may be possible to influence both the volume ratio between the two phases as well as the concentration of poly-HEMA in each.

Suitable temperature ranges for the fractionation include those between about 5 to about 50°C. Suitable standing times include between about 1 hour to about 7 days.

The amount of poly-HEMA discharged with the high molecular weight material should be from about 10 weight% to about 50 weight % of the poly-HEMA. Removal of about 5 to about 40 weight % with the low molecular weight fraction is often practical, and the yield of poly-HEMA with low polydispersity after removal of high and low molecular weight material may be about 10 to about 90% and preferably about 30 to about 80% of the original amount. The reduced yield is however a minor consideration since the poly-HEMA produced by free radical polymerization is relatively inexpensive and the fractionated material is of high value in many applications.

In a preferred poly-HEMA the amount of polymer molecules with molecular weight less than about 15,000 is less than about 10%, preferably less than about 5% and more preferably less than about 2%

It will be evident from the description and the examples that the fractionation methods are flexible and can be adapted according to the nature of the specific polymer. The conditions required to obtain the desired degree of polydispersity can easily be determined by simple small-scale experiments using the above disclosure.

Suitable temperature ranges include about 5 to about 50°C. Suitable standing times include between about 1 hour and to about 7 days.

One important advantage of poly-HEMA prepared by free radical polymerization followed by fractionation is that the initiators and other additives used in the polymerization have been used for many years, and their toxicology is known and well described. This is important when the poly-HEMA, the crosslinkable prepolymer or the resulting hydrogel is used in a medical application.

In some embodiments only the low molecular weight fraction is removed from the poly-HEMA. This can be done by the solvent/non-solvent process described above. In a preferred embodiment the low molecular weight material is removed during the washing step after the poly-HEMA has been functionalized.

In some embodiments, a poly-HEMA according to the present invention may also be formed directly by anionic polymerization or controlled free radical polymerization, such as with a TEMPO type polymerization, ATRP (atom transfer radical polymerization), GTP (Group transfer polymerization), and RAFT (Reversible addition-fragmentation chain transfer polymerization).

General conditions for the above processes are known and disclosed in "Controlled Radical Polymerization"; Krzysztof Matyjaszewski, editor; ACS Symposium Series 685; American Chemical Society, Washington, DC; 1998. For example, for anionic polymerization the desired silyl protected monomer is dissolved in a suitable solvent, such as THF solution. The reaction is conducted at reduced temperature, between about -60°C and about -90 °C using known initiators such as 1,1-diphenylhexyllithium as initiator. The polymerization may be terminated by conventional means, such as, but not limited to degassed methanol.

The poly-HEMA compositions having a specific molecular weight range and polydispersity can be used to make crosslinkable prepolymers with well-defined polydispersity and molecular weight. As but one example, the crosslinkable prepolymers can have acrylic groups which can be crosslinked by UV in an extremely short time to form contact lenses with very desirable properties so far unobtainable by conventional methods.

In some embodiments, the poly-HEMA is functionalized to form a crosslinkable prepolymer by attaching a crosslinkable functional group thereto. Generally the functional group can provide the ability to crosslink and form crosslinked polymers or hydrogels to the prepolymer. Suitable reactants that provide the crosslinkable functional groups have the structure A-S-F, where A is an attaching group which is capable of forming a covalent bond with a hydroxyl group in the poly-HEMA; S is a spacer and F is a functional group comprising an ethylenically unsaturated moiety. Suitable attaching groups, A, can include chloride, isocyanates, acids, acid anhydrides, acid chlorides, epoxies, azalactones, combinations thereof and the like. Preferred attaching groups can include acid anhydrides.

The spacer may be a direct bond, a straight, branched or cyclic alkyl or aryl group having 1 to 8 carbon atoms and preferably 1 to 4 carbon atoms or a polyether chain of the formula -(CH₂-CH₂-O)ₙ- where n is between 1 and 8 and preferably between 1 and 4.

Suitable functional groups comprise free radical polymerizable ethylenically unsaturated moieties. Suitable ethylenically unsaturated groups have the formula

-C(R¹⁰)=CR¹¹R¹²

Where R¹⁰, R¹¹ and R¹² are independently selected from H, C₁₋₆ alkyl, carbonyl, aryl and halogen. Preferably R¹⁰, R¹¹ and R¹² are independently selected from H, methyl, aryl and carbonyl, and more preferably in some embodiments selected from H and methyl.

Preferred reactants include methacrylic acid chloride, 2-isocyanatoethylacrylate, isocyanatoethyl methacrylate (IEM), glycidyl methacrylate, cinnamic acid chloride, methacrylic acid anhydride, acrylic acid anhydride and 2-vinyl-4-dimethylazalactone. Methacrylic acid anhydride is preferred.

Suitable amounts of the crosslinkable functional group attached to the poly-HEMA include from about 1 to about 20 %, and preferably between about 1.5 to about 10 %, and most preferably from about 2 to about 5% on a stoichiometric basis based upon the amount of available hydroxyl groups in the poly-HEMA. The degree of functionalization may be measured by known methods such as determination of unsaturated groups or by hydrolysis of the bond between the functional reactant and the polymer followed by determination of the released acid by HPLC.

Depending on the attaching group selected, the functionalization may be conducted with or without a conventional catalyst. Suitable solvents include polar, aprotic solvents which are capable of dissolving the poly-HEMA at the selected reaction conditions. Examples of suitable solvents include dimethylformamide (DMF), hexamethylphosphoric triamide (HMPT), dimethyl sulfoxide (DMSO), pyridine, nitromethane, acetonitrile, dioxane, tetrahydrofuran (THF) and N-methylpyrrolidone (NMP). Preferred solvents include formamide, DMF, DMSO, pyridine, NMP and THF. When IEM is used the catalyst is a tin catalyst and preferably dibutyl tin dilaurate.

The functionalization reaction mixture may also contain a scavenger capable of reacting with moieties created by the functionalization. For example, when acid anhydrides are used as the attaching group, it may be beneficial to include at least one tertiary amine, a heterocyclic compound with an aprotic nitrogen or other lewis bases to react with the carboxyl group which is generated. Suitable tertiary amines include pyridine, triethylenediamine and triethylamine, with triethylamine being preferred. If included the tertiary amine may be include in a slight molar excess (about 10%). In a preferred embodiment the solvent is NMP, the reactant is methacrylic acid anhydride, acrylic acid anhydride or a mixture thereof and triethylamine is present. The most preferred reactant is methacrylic acid anhydride.

The reaction can be run at about room temperature. Each functional group will require a specific temperature range, which is understood by those of skill in the art. Ranges of about 0°C and 50°C and preferably about 5°C and about 45°C are suitable. Ambient pressures may be used. For example, when the crosslinkable functional group is an acid anhydride the functionalization is conducted at temperatures between about 5°C and about 45 °C and for times ranging from about 20 to about 80 hours. It will be appreciated by those of skill in the art, that ranges outside those specified may be tolerated by balancing the time and temperatures selected.

The reaction is run to produce a crosslinkable prepolymer with a poly-HEMA backbone having a molecular weight and polydispersity as defined above.

Apart from attaching crosslinkable side groups other side groups may provide additional functionality including, but not limited to photoinitiators for crosslinking, pharmaceutical activity and the like. Still other functional groups may contain moieties that can bind and/or react with specific compounds when the crosslinked gels are used in analytical diagnostic applications.

Once the crosslinkable prepolymer has been formed, substantially all unreacted reactants and byproducts should be removed. By "substantially all" we mean that less than about 0.1 weight% remains after washing. This can be done by conventional means, such as ultrafiltration. However, in the present invention It may be possible to purify the cross-linkable prepolymer by swelling the prepolymer with water and rinsing with water to remove substantially all of the undesired constituents including monomeric, oligomeric or polymeric starting compounds and catalysts used for the preparation of the poly-HEMA and byproducts formed during the preparation of the crosslinkable prepolymer. The washing is conducted with deionized water and conditions are selected to provide a large surface to volume ratio of the crosslinkable prepolymer particles. This can be done by freeze drying the crosslinkable prepolymer, making a thin film from the crosslinkable prepolymer, extruding the crosslinkable prepolymer into rods, nebulizing the crosslinkable prepolymer solution into the deionized water, and other like methods, which are know to those skilled in the art.

The washings may be conducted in batches with about 3 to about 5 water replacements at room temperature and the equilibrium time between water replacements can be shortened by washing (extracting) at elevated temperatures below about 50°C.

This process has numerous advantages over methods of the prior art. The water removes impurities which would leach out during storage and use, providing confidence that a pure material, suitable for the end use, has been produced.

In some embodiments unfractionated poly-HEMA having polydispersity outside the preferred range, or poly-HEMA from which only the high molecular weight material has been removed, is functionalized and the functionalized material is washed repeatedly with large volumes of water to remove reactants and poly-HEMA of low molecular weight. By this method a very pure functionalized poly-HEMA of low polydispersity such as below 2.0, preferred below 1.7 and more preferred below 1.5, can be obtained. The functionalized crosslinkable poly-HEMA obtained by this method comprises less than 10%, preferably less than 5% and more preferably less than 2% of poly-HEMA of molecular weight smaller than about 15,000.

The extent to which the small molecules should be removed depends on the degree of functionalization and the intended use. Preferably, during cure, all poly-HEMA molecules should become bound into the polymer network by at least two covalent bonds. Due to the statistical nature of the functionalization and the cure, the probability that a poly-HEMA molecule will be bound into the polymer network through only one covalent bond or none at all increases with decreasing peak molecular weight and decreasing degree of functionalization.

For lower functionalization relatively more of the low molecular weight material should be removed. The correct amount can easily be determined by experiments comparing removal and mechanical properties.

Once the crosslinkable prepolymer has been purified it is then dissolved in a water replaceable diluent to form a viscous solution. The diluent should function as a medium in which the crosslinkable functionalized poly-HEMA prepolymer can be dissolved and in which the crosslinking reaction or cure can take place. In all other respects the diluent should be nonreactive. Suitable diluents include those capable of dissolving, at or below 65°C, between about 30 weight % to about 60 weight % crosslinkable prepolymer based upon the total weight of the viscous solution. Specific examples include alcohols having one to four carbon atoms, and preferably methanol, ethanol, propanol and mixtures thereof. Water may be used as a co-diluent in minor amounts such as less than about 50% of the total diluent. For hydrogels, diluents should be added to the crosslinkable prepolymer in an amount which is approximate or equal to the amount of water present in the final hydrogel. Diluent amounts between about 40 and about 70 weight % of the resulting viscous solution are acceptable.

Viscous solutions of the present invention have a viscosity of about 50,000 cps to about 1x10⁷ cps at 25°C, preferably of about 100,000 cps to about 1,000,000 cps at 25°C, and more preferably of about 100,000 cps to about 500,000 cps at 25°C.

Preferably the diluents are also safe for the article's intended end use. So, for example, when the article being formed is a contact lens, the solvent should preferably be safe for ocular contact and ophthalmically compatible. This is particularly important for diluents that will not or will only partially be removed from the resulting article prior to use. Diluents that will not be evaporated from the resulting article should have the capability to bring the Tg of the viscous solution to below about room temperature, (preferably a Tg less than about -50°C) and low vapor pressures (boiling point above about 180°C). Examples of biocompatible diluents include polyethylene glycols, glycerol, propylene glycol, dipropylene glycol mixtures thereof and the like. Preferred polyethylene glycols have molecular weights between about 200 and 600. Use of biocompatible diluents allows the removal of a separate washing/evaporation step to remove the diluents.

Low boiling diluents may also be used, but may require an evaporation step for diluents which are not compatible with the intended use environment. Low boiling diluents are polar and generally have low boiling points (less than about 150°C), which make removal via evaporation convenient. Suitable low boiling diluents include alcohols, ethers, esters, glycols, mixtures thereof and the like. Preferred low boiling diluents include alcohols, ether alcohols, mixtures thereof and the like. Specific examples of low boiling diluents include 3-methoxy-1-butanol, methyl lactate, 1-methoxy-2-propanol, 1-ethoxy-2-propanol, ethyl lactate, isopropyl lactate, mixtures thereof and the like.

A polymerization initiator may also be added. The initiator may be any initiator that is active at the processing conditions. Suitable initiators include thermally activated, photoinitiators (including UV and visible light initiators) and the like. Suitable thermally activated initiators include lauryl peroxide, benzoyl peroxide, isopropyl percarbonate, azobisisobutyronitrile, 2,2-azobis isobutyronitrile, 2,2-azobis 2-methylbutyronitrile and the like. Suitable photoinitiators include aromatic alpha hydroxyketone or a tertiary amine plus a diketone. Illustrative examples of photoinitiator systems are 1-hydroxycyclohexylphenyl ketone, 2-hydroxy-methyl-1-phenyl-propan-1-one, benzophenone, thioxanthen-9-one, a combination of camphorquinone and ethyl-4-(N,N-dimethylamino)benzoate or N-methyldiethanolamine, hydroxycyclohexyl phenyl ketone, bis(2,4,6-trimethylbenzoyl)-phenyl phosphine oxide and bis(2,6-dimethoxybenzoyl)-2,4,4-trimethylpentyl phosphine oxide, (2,4,6-trimethylbenzoyl)diphenyl phosphine oxide and combinations thereof and the like. Photoinitiation is a preferred method and bis(2,6-dimethoxybenzoyl)-2, 4, 4-trimethylpentyl phosphine oxide, bis(2,4,6-trimethylbenzoyl)-phenyl phosphine oxide and 2-hydroxy-methyl-1-phenyl-propan-1-one are preferred photoinitiators. Other initiators are known in the art, such as those disclosed in US 5,849,841, at column 16, the disclosure of which is incorporated herein by reference.

Other additives which may be incorporated in the prepolymer or the viscous solution include, but are not limited to, ultraviolet absorbing compounds, reactive dyes, organic and inorganic pigments, dyes, photochromic compounds, release agents, antimicrobial compounds, pharmaceuticals, mold lubricants, wetting agents, other additives desirable to maintain a consistent product specification, (such as but not limited to TMPTMA) combinations thereof and the like. These compositions may be added at nearly any stage and may be copolymers, attached or associated or dispersed.

The viscous solution should preferably not contain compounds such as free monomers which can, during cure, give polymer material which is not bound up in the network and/or will give residual extractable material.

In a solution of a polymer the rheological properties are to a high degree determined by the longest molecules. The poly-HEMA of the present invention is low in molecules of very high molecular weight and this gives their solutions a number of desirable properties.

The viscous solutions of the present invention have beneficially short relaxation times. Relaxation times are less than about 10 seconds, preferably less than about 5 seconds and more preferably less than about 1 second. Short relaxation times are beneficial because prepolymers having them are capable of relieving flow induced stresses prior to curing so the cured polymer network is free of locked-in stresses. This allows the viscous solutions of the present invention to be processed without long "hold" times between closing the mold and curing the viscous solution.

In some embodiments, in order to limit unwanted stresses on the lens, it is beneficial to allow the viscous solution to rest in the closed mold for a period two to three times longer than the viscous solution's relaxation time. In some embodiments, the viscous solution of the present invention may have beneficially short relaxation times at room temperature (less than about 10 seconds, preferably less than about 5 seconds, and more preferably less than about 1 second) which allow for hold times which are generally less than about 30 seconds, preferably less than about 10 seconds and more preferably less than about 5 seconds.

An additional benefit of the short holding times of the present invention is that they minimize oxygen diffusion into the crosslinkable prepolymer from the mold parts. Diffusion of oxygen can impair the curing process at the surface of the article. It will be appreciated that the viscous solution may be held for longer than the times specified in low oxygen content molds with minimal or no negative impact other than slower production times.

The mold containing the viscous solution is exposed to ionizing or actinic radiation, for example electron beams, X-rays, UV or visible light, ie. electromagnetic radiation or particle radiation having a wavelength in the range of from about 280 to about 650 nm. Also suitable are UV lamps, HE/Cd , argon ion or nitrogen or metal vapor or NdYAG laser beams with multiplied frequency. The selection of the radiation source and initiator are known to those of skill in the art. Those of skill in the art will also appreciate that the depth of penetration of the radiation in to the viscous solution and the crosslinking rate are in direct correlation with the molecular absorption coefficient and concentration of the selected photoinitiator. In a preferred embodiment the radiation source is selected from UVA (about 315 - about 400 nm), UVB (about 280-about 315) or visible light (about 400 -about 450 nm), at high intensity. As used herein the term "high intensity" means those between about 100 mW/cm² to about 10,000 mW/cm². The cure time is short, generally less than about 30 seconds and preferably less than about 10 seconds. The cure temperature may range from about ambient to elevated temperatures of about 90°C. For convenience and simplicity the curing is preferably conducted at about ambient temperature. The precise conditions will depend upon the components of lens material selected and are within the skill of one of ordinary skill in the art to determine.

The cure conditions must be sufficient to form a polymer network from the crosslinkable prepolymer. The resulting polymer network is swollen with the diluent and has the form of the mold cavity.

Once curing is completed, the molds are opened. Post molding purification steps to remove unreacted components or byproducts are either simplified compared to conventional molding methods, or are not necessary in the present invention. If a biocompatible diluent is used no washing or evaporating step is required at this phase either. It is an advantage of the present invention that when a biocompatible diluent is used, both post molding extraction and diluent exchange steps are not required. If a low boiling diluent is used, the diluent should be evaporated off and the lens hydrated with water.

The resulting lenses comprise a polymer network, which when swelled with water becomes a hydrogel. Hydrogels of the present invention may comprise between about 20 to about 75 weight % water, and preferably between about 20 to about 65 weight% water. The hydrogels of the present invention have excellent mechanical properties, including modulus and elongation at break. The modulus is at least about 20 psi, preferably between about 20 and about 90 psi, and more preferably between about 20 and about 70 psi.

The elongation at break is greater than about 100% and preferably greater than about 120%. Due to the absence of loose polymer chains, the hydrogels will after high relative deformation such as 100% return to their original shape without distortion. The hydrogels of the present invention are also free from visible haze and distortion. The foregoing combination of properties makes the hydrogels of the present invention excellently suited for use as ophthalmic devices and particularly soft contact lenses.

While the present invention has been particularly described above and drawings, it will be understood by those skilled in the art that the foregoing ad other changes in form and details may be made therein without departing from the spirit and scope of the invention, which should be limited only by the scope of the appended claims.

## Claims

1. A method of forming an ophthalmic lens, the method comprising the steps of:
dosing an amount of a reaction mixture comprising a prepolymer into a receiving area of a first mold part, wherein the first mold part comprises a lens forming surface and a retention area;
coupling a second mold part to the first mold part forming the prepolymer into a desired shape of the ophthalmic lens within a cavity formed between the first mold part and the second mold part;
curing the prepolymer to fashion the ophthalmic lens;
separating the first mold part from the second mold part so that the ophthalmic lens remains adhered to the first mold part;
dosing an amount of packing solution into the retention area of the first mold part;
applying a seal across the retention area thereby enclosing the ophthalmic lens and the packing solution within the retention area of the first mold part.

2. The method of claim 1 wherein the prepolmer comprises poly-HEMA having a peak molecular weight about 25,000 with a polydispersity of less than about 2 to a peak molecular weight of about 100,000 with a polydispersity of less than about 3.8.

3. The method of claim 1 wherein the step of dosing the prepolymer comprises:
dosing with precision tolerance of plus or minus 2 milligrams of a predetermined dose amount .

4. The method of claim 1 wherein the predetermined dose amount comprises about 30 milligrams.

5. The method of claim 1 wherein at least one of the first mold part and the second mold part is fashioned from a material comprising a polyolefin.

6. The method of claim 1 additionally comprising the step of applying an amount of heat to the ophthalmic lens and the packing solution capable of sterilizing the lens and packing solution.

7. The method of claim 1 wherein the first mold part comprises a material capable of withstanding the application of an amount of heat effective to sterilize the ophthalmic lens and packing solution.

8. The method of claim 1 wherein at least one of the first mold part and the second mold part comprises an area capable of transmitting sufficient light energy to cure the prepolymer.

9. The method of claim 8 wherein the sufficient light to cure the prepolymer comprises a frequency of between about 350 to 600 nanometers.

10. The method of claim 1 wherein the second mold part comprises a reusable mold part capable of molding multiple ophthalmic lenses.

11. The method of claim 10 wherein the second mold part comprises a metallic material.

12. The method of claim 1, wherein the ophthalmic lens comprises a silicone hydrogel contact lens.

13. The method of claim 1 wherein at least one of the first mold part and the second mold part comprises an area capable of transmitting sufficient light energy to sterilize the formed ophthalmic lens.

14. The method of claim 1 wherein the seal across the retention area comprises a metallic foil.

15. The method of claim 14, additionally comprising the step of adhering the metallic foil to the mold part to which the ophthalmic lens adhered through the application of heat.

16. The method of claim 1 wherein the first mold part comprises a front curve package part and the second mold part comprises a base curve mold part.

17. The method of claim 16 wherein the base curve part is formed via methods comprising diamond turning lathing.

18. The method of claim 16 wherein the base curve part comprises one or more of: glass and quartz.

19. The method of claim 16 wherein the base curve part is formed via methods comprising agile molding.

20. The method of claim 1 wherein the amount of packing solution dosed into the retention area is effective to fully hydrate the ophthalmic lens.

21. The method of claim 1 additionally comprising the step of applying an amount of heat to the ophthalmic lens and the mold part to which it is adhered to sterilize the lens and release the lens from the mold part to which it adhered.

22. The method of claim 1 wherein the first mold part comprises a material capable of withstanding the application of an amount of ultraviolet radiation effective to sterilize the ophthalmic lens and packing solution.

23. The method of claim 1 wherein at least one of the first mold part and the second mold part comprises an area capable of transmitting sufficient ultraviolet radiation to sterilize the ophthalmic lens.

24. Molding apparatus for fashioning an ophthalmic lens from a prepolymer, the molding apparatus comprising:
a first mold part comprising a concave lens surface area capable for receiving a prepolymer and comprising optical qualities to be imparted into a lens formed within the concave lens surface area;
a packing solution retention area comprising the lens surface area and a reservoir area for containing packing solution;
a seal surface suitable to receive a package seal to retain the lens and the packing solution ;
an area transmissive to light energy effective to cure the prepolymer.

25. The mold apparatus of claim 22 additionally comprising:
a concentric knife edge on the first mold part separating the lens surface area and the reservoir area for containing packing solution; and
a second mold part comprising:
a convex lens surface area comprising optical qualities to be fashioned into a back curve portion of the lens;
a body portion for providing support to the convex lens surface; and
multiple concentric ridges separating the convex lens surface area and the body portion.
